Europäisches Patentamt

European Patent Office

Office européen des brevets

(19)

(11) Publication number: **0 048 061**

**A2**

(12)

# EUROPEAN PATENT APPLICATION

(21) Application number: **81201002.3**

(22) Date of filing: **08.09.81**

(51) Int. Cl.³: **C 12 F 3/10**

(30) Priority: **12.09.80 NL 8005147**

(43) Date of publication of application:
**24.03.82 Bulletin 82/12**

(84) Designated Contracting States:
**AT BE CH DE FR GB IT LI LU NL SE**

(71) Applicant: **HOLLANDSE CONSTRUCTIE GROEP B.V.**
**Zoeterwoudseweg 1 Postbus 6**
**NL-2300 AA Leiden(NL)**

(72) Inventor: **van de Beek, Evert Hendrik**
**W. Barentzlaan 47**
**NL-2253 KE Voorschoten(NL)**

(74) Representative: **van der Beek, George Frans et al,**
**Nederlandsch Octrooibureau Johan de Wittlaan 15 P.O.**
**Box 29720**
**NL-2502 LS Den Haag(NL)**

(54) **Method and apparatus for processing vinasse.**

(57) The invention is related to a method for processing vinasse that is liberated during the preparation of alcohol from melasse and sugar cane sap and that until now was a useless waste product, in which this vinasse not only is used in a useful manner but moreover leads to an important saving of energy in the alcohol process, characterized in that this is obtained by the fact that the vinasse is liberated during the production of alcohol of which vinasse the dry solids content is 2 to 10%, is concentrated to a dry solids content of about 60%, this concentrated vinasse is burned with an excess of air by spraying in a steam boiler, the steam developed therein being partly supplied to the apparatus for the concentration of the vinasse and for the rest is used in the alcohol preparation process producing the vinasse. With this method a remarkable saving in energy is obtained.

The invention also is related to an apparatus for performing said method.

fig-1

Croydon Printing Company Ltd.

1

Method and apparatus for processing vinasse.

The invention is in the first place related to a method for processing vinasse which is a liquid waste product that is liberated during the preparation of alcohol from melasse and sugar cane sap. The vinasse that is liberated during the preparation of alcohol as a waste product is processed in several known ways. Thus, it is known to process the vinasse to fertilizer or to process it into cattle-fodder. Both methods are expensive.

Therefore it still occurs that vinasse is thrown away as waste for instance into the sea.

The object of the invention is to provide a method for processing vinase by which method this vinasse not only is used in a useful manner, but moreover leads to an important saving of energy in the alcohol process.

This object is obtained according to the invention by the fact, that vinasse liberated during the production of alcohol, of which vinasse the dry solids content is 2 to 10%, is concentrated to a dry solids content of about 60%, this concentrated vinasse is burned with an excess of air by spraying in a steam boiler, the steam developed therein being partly returned to the apparatus for concentrating the vinasse and for the rest is used in the alcohol preparation process producing the vinasse.

When the vinasse is concentrated to a dry solids content of about 60%, it has obtained a caloric value of about 2000 kcal/kg. In case one uses the steam developed in a steam boiler as result of the burning partly for concentrating the vinasse and further in the alcohol preparation process in this alcohol preparation process a fuel saving of about 50% is obtained.

When preparing alcohol from melasse, which is a by-product of the sugar factory in the production of sugar from sugar beets or cane sugar, in case of a supply of melasse of about 25 tons/hour for the preparation of 180,000 liters alcohol perday an amount of fuel of 100.000 liters per day is necessary. Thereby an amount of vinasse of about 67.5 tons per hour with a dry solids content of about 10% is formed.

After concentration an burning a steam production of 29 tons/

2

hour is possible of which about 7 tons/hour are used for the concentration apparatus that increases the dry solids content of the vinasse to make this suitable for the burning. In that case 22 tons of steam per hour remain that when supplied to the alcohol factory with the same production of alcohol of 180.000 liters per day reduces the consumption of oil to 53,000 liters per day which is practically half of the oil consumption mentioned earlier.

The ashes produced by burning vinasse can be processed into potash and can be used as a raw material for making glass. The ashes originating from the vinasse of both the sugar beets and also of sugar cane can be used for the preparation of fertilizer.

The waste product vinasse that until now was practically without value can be used according to the invention in a very effective way for the production of alcohol while the residual ashproduct can be processed in a cheap way into fertilizer or can be processed to raw material for making glass respectively.

Therefore the invention also can be seen as a method for influencing in a favourable way the energy balance of the preparation of alcohol from melasse.

The alcohol prepared from melasse is considered more and more as a substitute fuel for the fuel of combustion engines or as a suitable admixture component respectively.

By using the waste formed by this production of alcohol that means the vinasse, in a useful way in the preparation of alcohol a substantial reduction of the price of this substitute fuel or fuel to be added respectively is possible. The energetic efficiency of the process is improved.

The ash that comes available by the burning of vinasse should not contaminate the burning installation as in that case the effect of it will substantially decrease. According to the invention it is in that case preferred to add to the vinasse ash substances that lower the melting point of the vinasse ash and in particular before the concentration takes place. The substances that lower the melting point are for instance potassium chloride, NaOH or $Na_2CO_3$. By lowering the melting point the ash is obtained in a liquid form immediately during the burning and remains liquid as long as it can be drained from the lower side of the combustion chamber or furnace.

3

According to a preferred embodiment of the invention the method is carried out in such a way, that the vinasse fed to the boiler is sprayed with the aid of steam under a pressure of at least 8 bar and under a liquid pressure of the concentrated vinasse of at least 6 bar with an excess of air of about 1.4, said air being preheated to a temperature of about 230°C which combustion air, steam and vinasse sprayed by steam come into a combustion chamber that is preheated to about 1200°C. The preheating of the combustion chamber, for instance with the aid of an oil burner or a gas burner, is necessary to initiate the burning process. In case the temperature is high enough the burning vinasse itself is able to keep the temperature at the correct value provided that the other conditions are met and the energy necessary for the preheating of the combustion air at the desired high temperature is supplied by the heat of the burning gases of the vinasse itself.

The invention is also related to an apparatus for burning vinasse and this apparatus according to the invention comprises a steam boiler with two passages, of which the first passage is formed by a furnace in the shape of a shaft with water pipes with natural circulation positioned above a sideways of the shaft mounted combustion chamber or muffle, covered with a refractory material, of in principle cylindrical shape with inclined axis and is provided with a vinasse spray means and tangential supply of air, which furnace has such a heat exchanger surface that the temperatur of the combustion gases at the end of the furnace and before entering the second passage is fallen to below the melting point of the ashes and in which the second passage forms a convection part with subsequently a evaporator, an economizer and a preheater for the combustion air to be supplied to the muffle, which second passage is flowed through in downward direction and on the upper side is provided with a supply device for balls which fall down through the second passage.

By taking care that the combustion gases that carry along the ashes when leaving the furnace have got a temperature being below the melting point of the ashes one obtains with certainty that ash deposits not stick on the tubes of the evaporator, economizer and so on present in the second passage. By mounting in the second passage a device for bringing about a stream of balls further is assured that deposits of ashes on the tubes are automatically removed. The balls can be caught in the lower part of the second passage and can pneumatically be supplied to the upper part.

To be certain that at the spot of the transition between the first and the second passage the temperature of the combustion gases has suffciently fallen according to the invention the boiler between the first and the second passage can be provided with a device for injecting cold air. By this one can take care that in case temperatures occur that are too high, that the temperature at the entrance in the second passage is sufficiently lower.

According to the invention the bottom of the furnace is oppositely inclined to the axis of the muffle and to the lower edge provided with a lockable slag discharge in such a manner that the liquid ashes assembling in the lower side of the furnace or comes out of the muffle respectively can be discharged at one point.

According to the invention the burning process can be further improved in case the muffle comprises a narrowed passage to the furnace. This results in a cyclone action on the burning particle in the combustion chamber. However, in that case that muffle has to be provided immediately before the wall of the narrowing with a slag discharge opening.

Now the invention will be elucidated with the aid of a drawing.

Fig. 1 shows a process diagram for the preparation of alcohol out of melasse.

Fig. 2 shows a same process diagram relating to a determined example.

Fig. 3 schematically shows in vertical section the device according to the invention.

Fig. 4 schematically shows a modified embodiment of the combustion chamber.

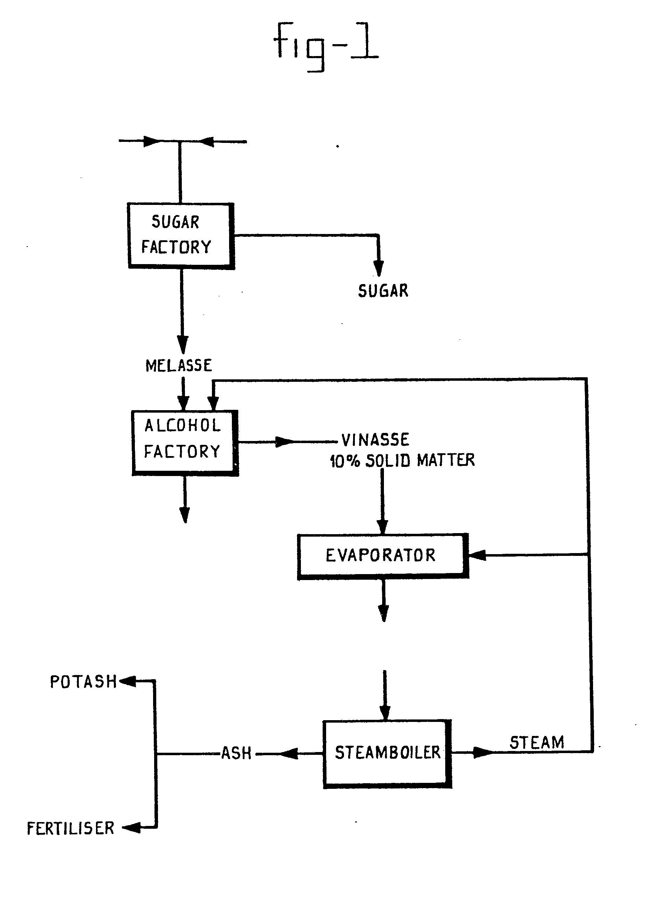

In the process diagram according to Fig. 1 can be seen that the sugar factory delivers two products namely sugar and melasse. This melasse is the rough material for preparing alcohol with as waste product vinasse, which comprises 10% or less solid material. This vinasse is concentrated in the evaporator and subsequently burned in a steam boiler of which the steam partly is supplied to the evaporator and further to the alcohol factory, while the ashes coming form the steam boiler can be intended to be processed to fertilizer or can be used for preparing potassium respectively.

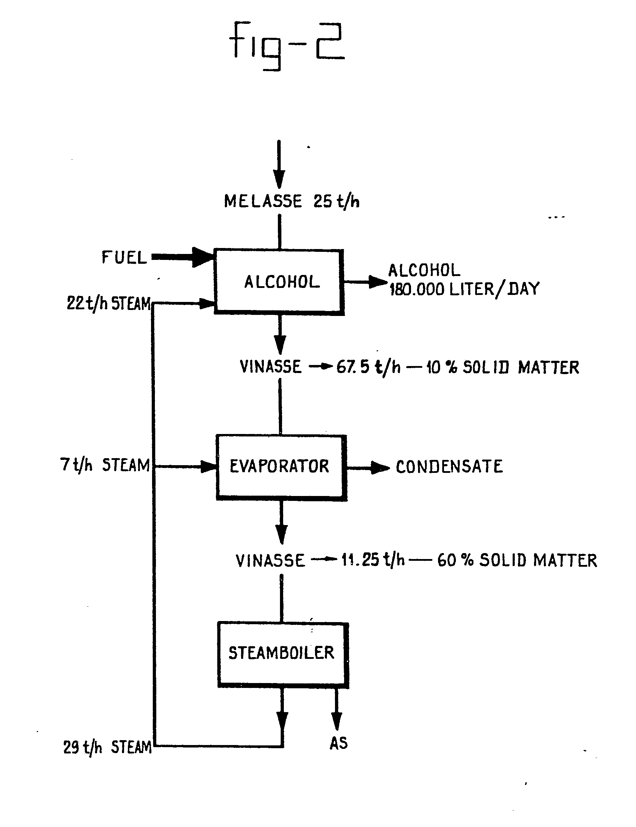

In the process diagram of Fig. 2 is started from a melasse preparation by the sugar factory of 25 tons/h. From this in the alcohol factory alcohol is prepared in an amount of 180,000 liter per day that leads to a production of vinasse of 67.5 ton/h with 10% of solid material that as shown in Fig. 1 is conducted to the steam boiler. This steam boiler delivers 29 tons of steam per hour of which 7 tons steam per hour is used in the evaporator for concentrating the vinasse while the remaining 22 tons of steam per hour are used in the alcohol factory.

For fuel is needed 53,000 liters oil per day that together with said 22 tons of steam per hour supplies the energy for preparing the 180,000 liters of alcohol per day.

In case the steam supplied by the steam boiler in which the vinasse is burned is not used for the preparation of the combustion and for the supply of energy to the alcohol factory then instead of 53,000 liters oil per day 100,000 liters oil per day is needed with the same amount of alchol per day and starting from an equal amount of melasse of 25 tons per hour.

Fig. 3 shows a steam boiler, comprising a furnace 1 known from the prior art, that is provided with water pipes which through the commun sample pipes are debouching into the steam drum 2.

At the side of the furnace an in principle cylindrical combustion chamber or muffle 3 is present which at the inner side is covered with a refractory material 4, and is provided with an oil burner 5 and with a vinasse spray device 6. With 7 the inlet openings are indicated of tangentially debouching air channels through which the preheated air flows in through the conduct 8 in the muffle. This air is preheated in the air heater, which can be of known construction, is positioned at the right hand lower side and is indicated with 9.

The oil burner 5 serves to preheat the refractory cover 4 of the muffle 3. Behind this refractory cover water conducting cool pipes as 10 are present, which are also connected to the steam drum 2.

The vinasse burner is designed in such a manner that the supplied steam is sprayed under pressure, by which in the preheated combustion chamber or muffle 3 under the influence of the whirly air

6

flow coming out of the air openings 7 provides a good mixing and burning in which the flame comes out of the muffle and provides in a known manner the formation of steam in the furnace.

The muffle 3 is inclined axially and the bottom 11 of the furnace is inclined in opposite direction.

Molten ashes therefore will always come on the bottom of the furnace and flow into the direction of the tap opening 12, which can be closed with the aid of the door 13.

At 14 an extra oil burner is present which may serve for preheating the lower part of the furnace and for keeping the slag liquid in particular in the initial phase.

At the right side of the furnace a so called second passage of the boiler is present comprising an evaporator, that is known per se, which is indicated in general with 14, the economizer indicated at 15 and the above mentioned air heater 9. The combustion gases flowing in vertical sense downwardly through the second passage have to have at the transition of the furnace to the first passage a temperature below the melting point of the ashes so that with certainty no liquid particles are able to come in to the second passage. This temperature mostly will be below 600°C. To guarantee this at 16 an air inlet pipe is shown with which via ventilator 17 cold air can be injected at the place where the hot gases of the first passage are tansferred in the second passage.

At 18 a pipe is present for supplying balls, which fall freely downwardly through the pipe bundles of the evaporator 14, the economizer 15 and the air heater 9 and are sampled again at 19 and pneumatically brought back via a cleaning device 20 to the conduit 19.

At 21 a ventilator is present, supplying combustion air to the muffle via the air heater 9.

On the lower part 22 a conduit, not shown, is provided which can lead to an electrostatic filter and subsequently to a chimney.

Furnace, evaporator, economizer and air heater are designed according to principles known per se but are adapted to the tendency of the temperature, that is necessary to make possible the combustion of vinasse without becoming filthy and in an efficient manner, for which reason further the preheated muffle is necessary, that maintains combustion of vinasse that is started and the direct discharge of liquid slags. By this and by the shower of balls in the second passage deposits are omitted, that may gradually lower the efficiency of the boiler.

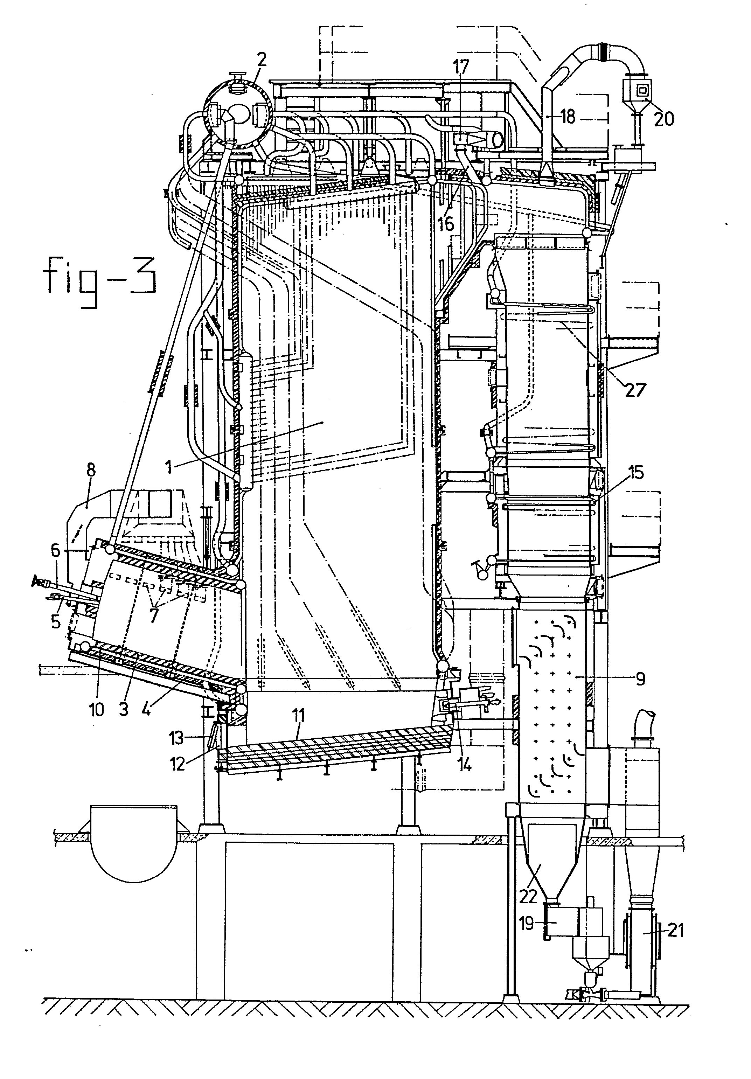

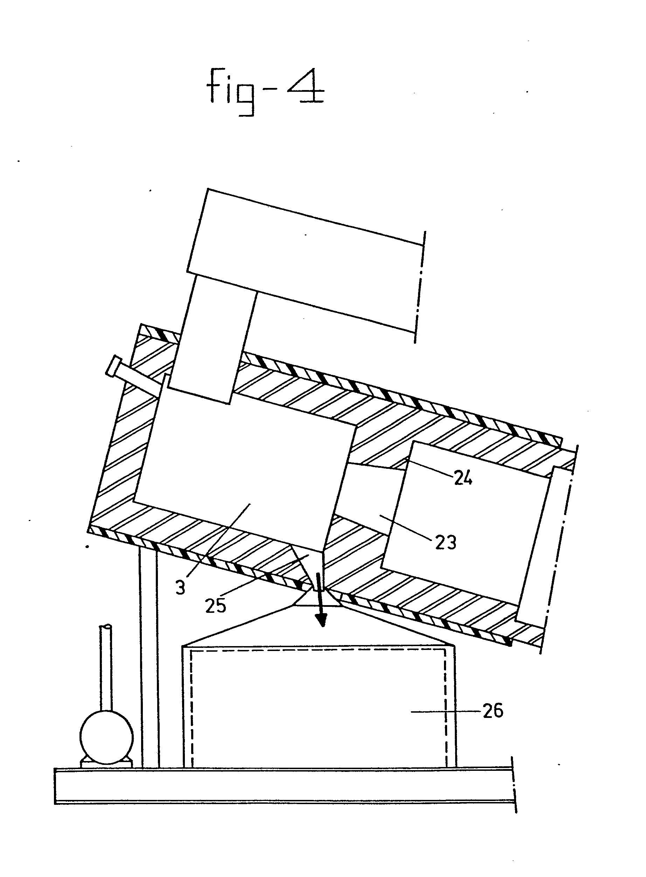

Fig. 4 only shows the muffle pipe of the boiler in an other embodiment.

The main difference with regard to the muffle 3 according to Fig. 3 is the narrowed passage 23 in the muffle formed by a wall 24. The muffle 3, that is designed in the same way as shown in Fig. 3, obtains by this narrowing the effect that in the muffle a cyclone action develops. This not only improves the burning but has also as result a better distribution of the heated gases over the pipe bundle of the furnace.

Immediately before the wall 24 a discharge opening 25 is present, which opens into the space 26 for sampling slags.

# C L A I M S.

1. Method for processing vinasse which is a liquid waste product that is liberated during the preparation of alcohol from melasse and sugar cane sap, <u>characterized in that</u> the vinasse liberated during the production of alcohol of which the dry solids content is 2 to 10%, is concentrated to a dry solids content of about 60%, this concentrated vinasse is burned with an excess of air by spraying in a steam boiler, the steam developed therein being partly supplied to the apparatus for the concentration of the vinasse and for the rest is used in the alcohol preparation process producing the vinasse.

2. Method according to claim 1, <u>characterized in that</u> before the cncentration of the vinasse substances are added thereto, which lower the melting point of the ash.

3. Method according to claim 1 or 2 <u>characterized in that</u> the vinasse fed to the boiler is sprayed with the aid of steam under a pressure of at least 8 bar and under a liquid pressure of the concentrated vinasse of at least 6 bar with an excess of air of about 1.4, said air being preheated to a temperature of about 230°C, which combustion air, steam and vinasse sprayed by said steam come into a combustion chamber, that is preheated to about 1200°C.

4. Apparatus for burning vinasse in particular apparatus for applying the method according to claim 1, <u>characterized in that</u> this apparatus comprises a steam boiler with two passages of which the first passage is formed by the furnace in the shape of a shaft with water pipes with natural circulation, positioned above a combustion chamber or muffle that is positioned sideways of the shaft and is covered with refractory material, said chamber in generally having a cylindrical shape with inclined axis and is provided with a vinasse spray device and tangential supply of air, which furnace has such a heat exchanging surface that the temperature of the combustion gases at the end of the furnace and before entering the second passage is lowered below the melting point of the ashes and in which the second passage forms a convection part with subsequently an evaporator, an economizer and a preheater for the combustion air to be supplied to the muffle, which second passage in downward direction is flown and at the upper side is provided with a supply device for balls that fall downwardly through the second passage.

5. Apparatus according to claim 4 <u>characterized in that</u> the bottom of the furnace is inclined opposite to the axis of the muffle and at its lower edge is provided with a lockable slag discharge.

6. Apparatus according to claim 4, <u>characterized in that</u> the muffle comprises a narrow passage to the furnace and immediately before the wall of the narrowing is provided with a slag discharge opening.

7. Apparatus according to claim 4, 5 or 6, <u>characterized in that</u>, the furnace at its lower end opposite to the muffle is provided with an extra gas or oil burner.

8. Apparatus according to claim 4, 5, 6 or 7 <u>characterized in that</u> the boiler between the first and the second passage is provided with a device for injecting cold air.

fig-1

# Fig-2

MELASSE 25 t/h

FUEL → **ALCOHOL** → ALCOHOL 180.000 LITER/DAY

22 t/h STEAM →

VINASSE → 67.5 t/h — 10 % SOLID MATTER

7 t/h STEAM → **EVAPORATOR** → CONDENSATE

VINASSE → 11.25 t/h — 60 % SOLID MATTER

**STEAMBOILER**

29 t/h STEAM                    AS

0048061

fig-3

fig-4